# EUROPEAN PATENT SPECIFICATION

(11) **EP 4 046 169 B1**
(45) Date of publication and mention of the grant of the patent: **26.07.2023**
(21) Application number: 19874777.6
(22) Date of filing: 15.10.2019
(51) Int. Cl.: G21C 7/12, G21C 13/036, G21C 13/067

(54) **THERMAL SLEEVE FOR A CONTROL ROD DRIVE MECHANISM AND ASSOCIATED REPLACING METHOD**
THERMISCHE HÜLSE FÜR EINEN STEUERSTABANTRIEB UND ZUGEHÖRIGES AUSTAUSCHVERFAHREN
MANCHON THERMIQUE POUR MÉCANISME D'ENTRAÎNEMENT DE BARRE DE COMMANDE ET PROCÉDÉ DE REMPLACEMENT CORRESPONDANT

(43) Date of publication of application: 24.08.2022
(73) Proprietor: Framatome, 92400 Courbevoie (FR)
(72) Inventor: FUTIN, Emmanuel, 71530 Crissey (FR); DARGAUD, Remi, 71600 Paray-le-Monial (FR)
(74) Representative: Lavoix
(86) International application number: PCT/IB2019/001451
(87) International publication number: WO 2021/074662

(56) References cited:
- FR-A1- 2 689 297
- US-A1- 2019 252 082

## Description

The present invention concerns a thermal sleeve for a control rod drive mechanism of a nuclear reactor pressure vessel.

The present invention concerns also a method for replacing a damaged thermal sleeve of a control rod drive mechanism of a nuclear reactor pressure vessel.

Control rods are used in nuclear reactors to control the fission rate of the nuclear fuel in the reactor vessel. A control rod drive mechanism is designed to insert, withdraw or maintain the position of these control rods from which neutron absorbers are suspended.

Moreover, the reactor vessel closure head comprises thermal sleeves, whose main function is to shield the control rod drive mechanism nozzle form thermal shocks when the hot control rod drive is withdrawn from the core. The thermal sleeves wear over time due to vibrations and eventually fail. Conventionally, the reactor vessel closure head is removed from the vessel and placed on a head stand, then the control rod drive mechanism is fully removed and the thermal sleeve is replaced.

The document US 2019/025082 discloses a method for replacing a damaged thermal sleeve with a new thermal sleeve comprising individual leafs circumferentially separated one form the other by a slot and each associated to a tube end by a common fastener..

Nevertheless, such a new thermal sleeve provides a limited thermal protection to the nozzle. Moreover, the rigidity and the fatigue resistance over time of this new thermal sleeve is insufficient.

One of the aims of the invention is therefore to provide a thermal sleeve for a control rod drive mechanism which improve the safety of the reactor vessel by presenting a better thermal protection, rigidity and fatigue resistance.

To this aim, the invention proposes a thermal sleeve for a control rod drive mechanism of a nuclear reactor pressure vessel, the thermal sleeve comprising a tube comprising an upper end and a lower end ; and a plurality of protrusions fixed at the upper end of the tube, each protrusion extending radially outward the tube, the protrusions being different from the tube, the protrusions being intermeshed to form a continuous collar presenting an outer diameter greater than the outer diameter of the tube.

In specific embodiments, the thermal sleeve comprises one or several of the optional following features, taken individually or according to any technical feasible combination:
- the thermal sleeve comprises also a funnel having a frustoconical portion fixed at the lower end of the tube,
- the thermal sleeve comprises eight protrusions, each extending over an equal angular range,
- each protrusion comprises a fixation plate fixed to the inner surface of the tube.
- the tube defines a plurality of openings circumferentially spaced, each protrusion comprising a pin protruding from the fixation plate radially outward the tube, each opening receiving one of the pins to lock the tube with the associated protrusion,
- the protrusions comprise first protrusions and second protrusions, each of the first protrusions comprising two tongues protruding circumferentially in opposite directions, each of the second protrusions comprising two grooves, each groove receiving one of the tongues of the adjacent first protrusion to lock the said first protrusion with the said second protrusion, and
- the tube comprises a plurality of mounting brackets, each bracket protruding lengthwise from the upper end of the tube, each first protrusion comprising a notch receiving one of the brackets to prevent the said first protrusion to rotate with respect to the tube.

The invention also concerns a method for replacing a damaged thermal sleeve of a control rod drive mechanism of a nuclear reactor pressure vessel, the control rod drive mechanism comprising a nozzle in which the damaged thermal sleeve is inserted, the nozzle comprising an inner end located in the pressure vessel and an outer end located outside the pressure vessel, the nozzle comprising a flared support surface at the outer end, the method comprising at least the following steps :
- removing the damaged sleeve from the nozzle;
- providing a new thermal sleeve comprising a tube and a plurality of protrusions, the protrusions being different from the tube, each protrusion extending radially, the tube comprising an upper end and a lower end;
- inserting the new thermal sleeve through the inner end of the nozzle, the protrusions being in a separated configuration, away from the tube and enabling the sliding of the new thermal sleeve in the nozzle;
- moving the protrusions in an assembled configuration in which the protrusions are intermeshed to form a collar presenting an outer diameter greater than the outer diameter of the tube; and
- fixing the protrusions to the upper end of the tube, the collar resting on the support surface of the nozzle to hold the new thermal sleeve in position in the nozzle.

In specific embodiments, the method comprises one or several of the optional following features, taken individually or according to any technical feasible combination:
- the protrusions comprise first protrusions and second protrusions, the second protrusions resting on the upper end of the tube and the first protrusions resting on the second protrusions during the insertion of the new thermal sleeve in the nozzle,
- the second protrusions are first moved towards the assembled configuration, the second protrusions being spaced from each other and forming slots, the first protrusions being next moved towards the assembled configuration by insertion of each first protrusion in one of the slots.,
- the method comprises a step of crimping at least one of the protrusions on the tube,
- the method comprises a step of welding between the protrusions and the tube,
   and
- the method comprises a step of disposing means for supporting the new thermal sleeve below the lower end of the tube.

The invention will be better understood upon reading of the following description, given solely as a non-limiting example, and made in reference to the appended drawings, in which:
- figure 1 schematically shows a cross-sectional view of a nuclear reactor pressure vessel including a plurality of control rod drive mechanism assemblies;
- figure 2 shows a cross-sectional view of a control rod drive mechanism nozzle of figure 1 and an associated conventional thermal sleeve;
- figure 3 shows an exploded view of a thermal sleeve according to the invention;
- figure 4 shows a perspective view of the thermal sleeve of figure 3; and
- figure 5 shows an upper view of the thermal sleeve of figure 4.

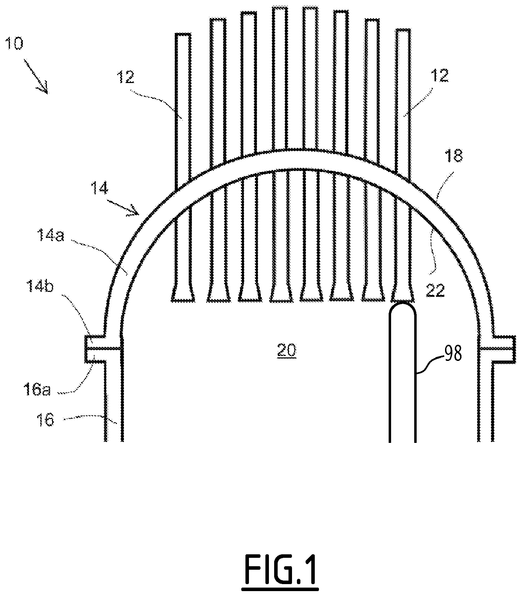

Figure 1 schematically shows a cross-sectional view of a nuclear reactor pressure vessel 10 of a nuclear pressurized water reactor.

The pressure vessel 10 includes a reactor vessel closure head 14 including a hemispherical wall 14a positioned atop a flange 14b.

The closure head 14 is removably fixed on top of a cylindrical shell 16 via flange 14b fixed to a flange 16a of the cylindrical shell 16 by studs and nuts.

The hemispherical wall 14a includes an exterior hemispherical surface 18 facing away from an interior 20 of the pressure vessel 10 and an interior hemispherical surface 22 facing the toward interior 20.

During the operation of the nuclear reactor, the closure head 14 is fixed on top of the cylindrical shell 16. During refueling operations, the closure head 14 is removed from the cylindrical shell 16.

The pressure vessel 10 also comprises a plurality of control rod drive mechanism assemblies 12 extending upward from the hemispherical wall 14a.

The assemblies 12 extend through both the exterior hemispherical surface 18 and the interior hemispherical surface 22.

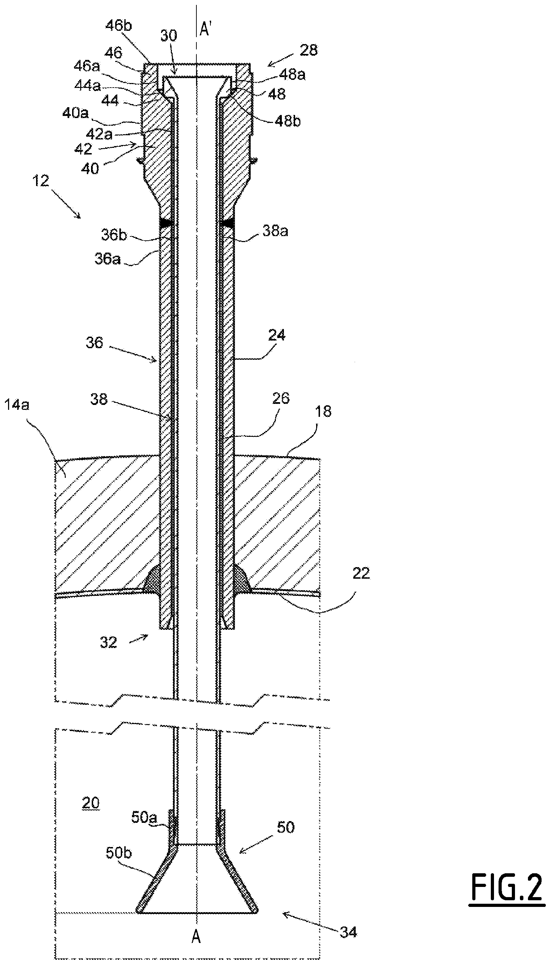

The figure 2 shows a cross-sectional view of the closure head 14 illustrating the details of an assembly 12 interrupted by break lines.

Each assembly 12 includes an outer tube in the form of a nozzle 24 permanently fixed in the wall 14a and a conventional thermal sleeve 26 lining the nozzle 24.

The nozzle 24 passes through a corresponding hole formed in the wall 14a and is welded to the wall 14a.

Each nozzle 24 extends along a vertical axis A-A'.

The terms axially, radially and circumferentially as used herein are used with respect to the vertical axis A-A'.

Each assembly 12 protrudes longitudinally along the vertical axis A-A' past the hemispherical surface 18 such that a first end of the nozzle 24 said outer end 28 and a first end 30 of the sleeve 26 are positioned outside of the pressure vessel 10.

Each assembly 12 also protrudes longitudinally along the vertical axis A-A' past the hemispherical surface 22 such that a second end said inner end 32 of the nozzle 24 and a second end 34 of the sleeve 26 are positioned in the interior 20 of the pressure vessel 10.

The nozzle 24 includes an intermediate portion 36 extending from the outer end 28 to the inner end 32 through the wall 14a.

The conventional thermal sleeve 26 includes an intermediate portion 38 extending from the first end 30 to the second end 34 through the wall 14a.

The outer end 28 of the nozzle 24 extends vertically along the vertical axis A-A' upward further than the first end 30 of the sleeve 26 away from the wall 14a.

The outer end 28 of the nozzle 24 includes a radially enlarged annular portion 40. The radially enlarged annular portion 40 is radially thicker than the intermediate portion 36 of the nozzle 24.

The radially enlarged annular portion 40 has an outer circumferential surface 40a that is radially further away from the vertical axis A-A' than an outer circumferential surface 36a of the intermediate portion 36.

The radially enlarged annular portion 40 includes a lower section 42 having an inner circumferential surface 42a of a same diameter as an inner circumferential surface 36b of the intermediate portion 36.

Above the lower section 42, an inner diameter of the enlarged annular portion 40 defines a radially enlarged flared support section 44.

The support section 44 is formed as an annular shoulder having a frustoconical inner circumferential support surface 44a extending radially away from the inner circumferential surface 42a while extending axially upward to join an inner circumferential surface 46a of an upper section 46 of the enlarged annular portion 40.

The upper section 46 defines a top edge 46b of the nozzle 24.

The first end 30 of the sleeve 26 includes a radially enlarged annular portion 48.

The radially enlarged annular portion 48 is radially thicker than the intermediate portion 38 of the conventional thermal sleeve 26.

The radially enlarged annular portion 48 has an outer circumferential surface 48a that is radially further away from the vertical axis A-A' than an outer circumferential 38a of the intermediate portion 38.

The radially enlarged annular portion 48 is supported by a support section 44 of the radially enlarged annular portion 40 of the nozzle 24. More specifically, the radially enlarged annular portion 48 includes a lower surface 48b that rests vertically on the support surface 44a. Over time, due to vibrations experienced by the conventional thermal sleeve 26, failure can occur at the radially enlarged portion 48.

The second end 34 of the sleeve 26 extends vertically downward further than the inner end 32 of the nozzle 24 away from the wall 14a.

The second end of sleeve 26 is formed by a funnel 50 that is fixed to the intermediate portion 38.

The funnel 50 includes a cylindrical section 50a which is fixed to the outer circumferential surface 38a of the intermediate portion and a frustoconical section 50b extending downward from the cylindrical section 50a.

The frustoconical section 50b enlarges radially as it extends downward vertically away from the intermediate portion 38.

The inner end 32 of the nozzle 24 is substantially cylindrically shaped and surrounds a section of intermediate portion 38 of the sleeve 26.

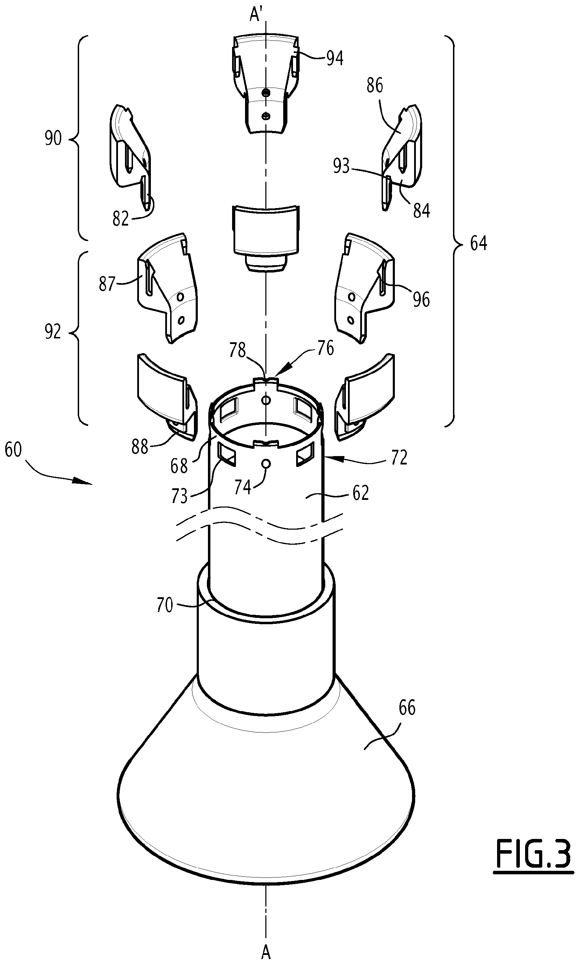

Figures 3 to 5 show a new thermal sleeve 60 according to the invention.

The new thermal sleeve 60 comprises a tube 62, a plurality of protrusions 64 and a funnel 66.

The tube 62 is advantageously composed of stainless steel type 304.

The tube 62 comprises an upper end 68 and a lower end 70.

The upper end 68 is positioned above the lower end 70 with respect to the vertical axis A-A'.

In particular, the upper end 68 is positioned outside of the pressure vessel 10 and the lower end 70 is positioned in the interior 20 of the pressure vessel 10.

As shown in figure 3, the tube 62 defines a plurality of openings 72 circumferentially spaced.

The openings 72 are positioned near the upper end 68, in particular at a distance less than 15 cm.

The tube 62 defines an opening 72 for each protrusion 64.

The tube 62 notably comprises eight openings 72 regularly circumferentially spaced.

In a first embodiment shown in figure 3, the openings 72 comprises first openings 73 and second openings 74, as shown in figure 3.

Each first opening 72 has advantageously a rectangular shape.

Each second opening 73 has advantageously a circular shape.

The first openings 73 and the second openings 74 are circumferentially alternately disposed.

In variant, in a second embodiment, each opening 72 is a first opening 73.

The tube 62 also comprises advantageously a plurality of mounting brackets 76, notably four brackets 76.

Each bracket 76 is protruding lengthwise following the vertical axis A-A' from the upper end 68 of the tube 62.

The brackets 76 are regularly circumferentially spaced.

Each bracket 76 comprises a notch 78 disposed at the summit of the bracket 76.

The protrusions 64 are different from the tube 62.

Each protrusion 64 is advantageously composed of stainless steel type 304.

The new thermal sleeve 60 comprises a protrusion 64 for each opening 72, notably eight protrusions 64.

The protrusions 64 are able to be in a separated configuration in which the protrusions 64 are apart from the tube 62 as shown in figure 3.

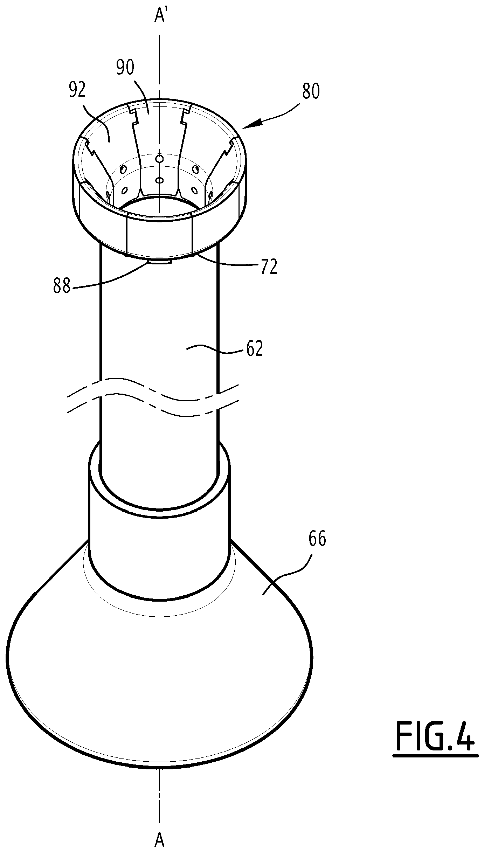

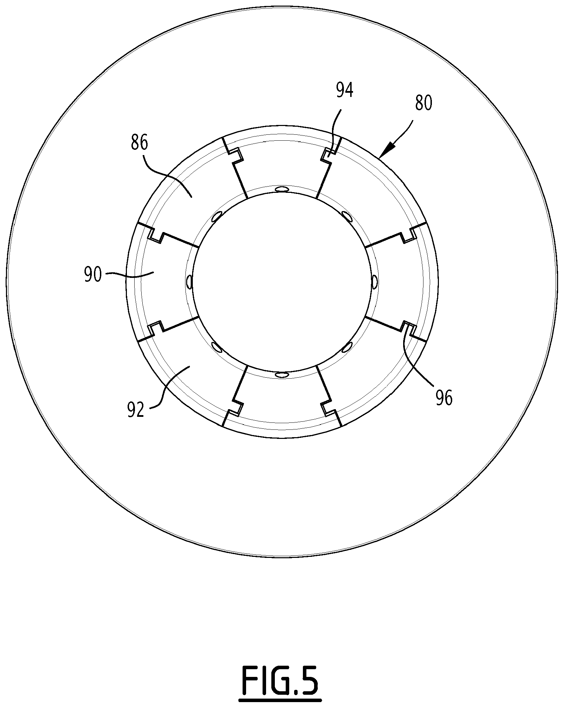

The protrusion 64 are able to switch to an assembled configuration, as shown in figure 4 and 5, in which the protrusions 64 are fixed to the tube 62.

In particular, each protrusion 64 is able to be fixed at the upper end 68 of the tube 62, side by side.

The protrusions 64 are designed to be intermeshed to form a continuous collar 80 presenting an outer diameter greater than the outer diameter of the tube 62 in the assembled configuration.

In particular, the outer diameter of the collar 80 is more than 20 % greater than the outer diameter of the tube 62.

The collar 80 has a circular shape without discontinuities on the periphery of the collar 80.

The protrusions 64 are each extending over an equal angular range.

Each protrusion 64 comprises a fixation plate 82 fixed to the inner surface of the tube 62.

Each protrusion 64 is extending radially from the fixation plate 82 outward the tube 62.

Each protrusion 64 comprises a lower surface 84 extending radially from the fixation plate 82 and able to rest vertically on the support surface 44a of the nozzle 24.

Each protrusion 64 comprises also an inclined upper surface 86 presenting a slope with the vertical axis A-A' advantageously comprised between 30 ° and 60 °.

Each protrusion 64 comprises two vertical side faces 87 joining the lower surface 84 and the upper surface 86.

At least one of the protrusions 64 comprises also a pin 88 protruding from the fixation plate 82 radially outward the tube 62.Each first opening 73 receives one of the pins 88 to lock the tube 62 with the associated protrusion 64 in the assembled configuration.

Each pin 88 has a complementary shape to the associated opening 72.

The protrusions 64 comprise first protrusions 90 and second protrusions 92, notably four first protrusions 90 and four second protrusions 92.

In the separated configuration, as shown in figure 3, the second protrusions 92 are located above the upper end 68 of the tube 62 and the first protrusions 90 are located above the second protrusions 90.

In the assembled configuration, as shown in figures 4 and 5, the first protrusions 90 and the second protrusions 92 are alternately disposed to form the collar 80.

In the first embodiment, only each second protrusion 92 comprises a pin 88 protruding from the fixation plate 82.

In variant, in the second embodiment, every protrusion 64 comprises a pin 88 protruding from the fixation plate 82.

As visible in figure 3, each first protrusion 90 comprises a notch 93 able to receive one of the brackets 78 to prevent the said first protrusion 90 to rotate with respect to the tube 62 in the assembled configuration.

Each first protrusion 90 comprises two tongues 94 protruding from the side faces 87.

The two tongues 94 protrudes circumferentially with respect to the tube 62 in opposite directions.

In the first embodiment, each tongue 94 extend vertically on the associated side face 87 from the upper surface 86.

In variant, in the second embodiment, each tongue 94 has a curved shape oriented towards the outward of the tube 62.

Each second protrusion 92 comprises two grooves 96 defined in the side faces 87.

In the first embodiment, each groove 96 extend vertically on the associated side face 87 from the upper surface 86.

In variant, in the second embodiment, each groove 96 has a curved shape oriented towards the outward of the tube 62.

As visible in figures 4 and 5, each groove 96 of a second protrusion 92 is able to receive one of the tongues 94 of the adjacent first protrusion 90 to lock the said first protrusion 90 with the said second protrusion 92 in the assembled position.

The funnel 66 has a frustoconical portion fixed at the lower end of the tube 62.

The funnel 66 is similar to the funnel 50 of the conventional thermal sleeve 26 and will not be described again.

A method for replacing a damaged conventional thermal sleeve 26 by a new thermal sleeve 60 according to the invention will be described below.

First, the nuclear reactor is stopped to perform maintenance operations.

The head 14 is removed from the shell 16 and placed on a head stand to perform the thermal sleeve replacement so that it is easy to access the inner end 32.

Next, the damaged sleeve 26 is removed from the nozzle 24.

In one preferred embodiment, the radially enlarged portion 48 of the conventional thermal sleeve 26 is broken apart such that the conventional sleeve 26 can be pulled downward through the nozzle 24 out of the inner end 32.

A new thermal sleeve 60 in the separated configuration is provided.

The protrusions 64 are therefore apart from the tube 62.

The protrusions 64 are disposed radially close to the vertical axis A-A' in order to enable the sliding of the new thermal sleeve in the nozzle 24.

In particular, the fixation plates 82 of the first protrusions 90 are in contact, the first protrusions 90 rest on the second protrusions 92 and the second protrusions 92 rest on the upper end 68 of the tube 62.

The new thermal sleeve 60 is then inserted into the nozzle 24 from the inner end 32 while on the head stand.

The new thermal sleeve 60 is slipped upwardly in the nozzle 24 until the protrusions 64 reach the support section 44 of the nozzle 24.

Then, the protrusions 64 are moved in the assembled configuration in which the protrusions 64 are intermeshed to form the collar 80, the collar 80 being able to rest on the support surface 44 of the nozzle 24.

The pin 88 of each protrusion 64 is then received by the associated opening 72 to fix said protrusion 64 with the tube 62.

In particular, the second protrusions 92 are first moved towards the assembled configuration.

The pin 88 of each second protrusion 92 is then received by the associated first opening 73 to fix said protrusion 64 with the tube 62.

The second protrusions 92 are spaced from each other and forming slots.

The first protrusions 90 are next moved towards the assembled configuration by insertion of each first protrusion 90 in one of the slots created by the second protrusions 92.

In particular, each tongue 94 is received and slide in the associated groove 96.

The notch 93 of each first protrusion 90 receives the associated brackets 78 from the tube 62 to prevent the said first protrusion 90 to rotate with respect to the tube 62 in the assembled configuration.

In the first embodiment, at least one of the first protrusion 90 is crimped on the tube 62, notably by deforming the fixation plate 82 in the associated second opening 74.

Advantageously, each first protrusion 90 is crimped on the tube 62.

In variant, in the second embodiment in which every opening 72 is a first opening 73, the pin 88 of each protrusion 64 is received by the associated first opening 73 to fix said protrusion 64 with the tube 62.

In particular, the curved groove 96 enables the pin 88 of the associated first protrusion 90 not to stop against the upper end 68 of the tube 62.

More specifically, during the insertion and the expansion of the protrusions 64 is done with an expansion tool received inside the tube 62 and between the protrusions 64.

The expansion tool includes a pole and a head at the end of pole. The head has an outer diameter sensibly equal to the inner diameter of the assembled fixation plates 82 in the assembled configuration.

As the tube 62 and the protrusions 64 are slid upward through the nozzle 24, the pole is located inside the tube 62 and the head is positioned above the protrusion 64.

By pulling the expansion tool downward, the protrusions 64 are forced radially outward towards the assembled configuration until the first protrusions 90 while enter into the slots formed by the second protrusions 92.

Then, the protrusions 64 are fixed to the upper end 68 of the tube 62.

The method comprises then an optional step of welding between the protrusions 64 and the tube 62 and/or between the protrusions 64.

In particular, at least a welded joint is formed on the entire inner perimeter between the lower extremity of the fixation plates 82 and the tube 62.

The new thermal sleeve 60 is then installed in the assembled configuration and operational.

In particular, the collar 80 rests on the support surface 44 of the nozzle 24 to hold the new thermal sleeve 60 in position in the nozzle 24.

In an optional step, means for supporting 98 the new thermal sleeve 60 are placed below the lower end 70 of the tube 62, in contact with the funnel 66, as shown in figure 1.

The means for supporting 98 are, for example, fixed to a control guide tube, the control guide tube receiving a respective control rod assembly that slides vertically inside the control rod guiding tube.

An embodiment of means for supporting 98 is, for example, disclosed in the document PCT/US19/54443.

The means for supporting 98 limit the downward movement of the new thermal sleeve 60 relative to the nozzle 24, thus avoiding wear at the contact area between the new thermal sleeve 60 and the nozzle 24. Therefore, it is possible to avoid a premature wear of the new thermal sleeve 60.

Finally, the head 14 is placed above the shell 16 and the nuclear reactor can be started again.

It is then understood that the invention has a number of advantages.

Indeed, the new thermal sleeve 60 according to the invention provides a better thermal protection than the replacement thermal sleeves described in the state of the art.

In particular, the continuous collar 80 provides a thermal protection on the whole periphery of the outer end 28 of the nozzle 24.

The protection of the control rod drive mechanism nozzle form thermal shocks is therefore improved.

Moreover, the rigidity and the fatigue resistance of the new thermal sleeve 60 is reinforced thanks to the collar 80.

The risk that the new thermal sleeve 60 get damaged during the operating of the nuclear reactor is then reduced.

In addition, the method for replacing the damage thermal sleeve 24 by the new thermal sleeve 60 according to the invention is easy and quick to implement.

The duration of the maintenance operation is therefore reduced and improved the operational availability of the nuclear reactor.

In the preceding specification, the invention has been described with reference to specific exemplary embodiments and examples thereof. It will, however, be evident that various modifications and changes may be made thereto without departing from the scope of invention as set forth in the claims that follow. The specification and drawings are accordingly to be regarded in an illustrative manner rather than a restrictive sense.

## Claims

1. A thermal sleeve (60) for a control rod drive mechanism of a nuclear reactor pressure vessel (10), the thermal sleeve (60) comprising :
- a tube (62) comprising an upper end (68) and a lower end (70) ; and
- a plurality of protrusions (64) fixed at the upper end (68) of the tube (62), each protrusion (64) extending radially outward the tube (62), the protrusions (64) being different from the tube (62), **characterized by** the protrusions (64) being intermeshed to form a continuous collar (80) presenting an outer diameter greater than the outer diameter of the tube (62).

2. The thermal sleeve (60) according to claim 1, wherein the thermal sleeve (60) comprises also a funnel (66) having a frustoconical portion fixed at the lower end (70) of the tube (62).

3. The thermal sleeve (60) according to claim 1 or 2, wherein the thermal sleeve (60) comprises eight protrusions (64), each extending over an equal angular range.

4. The thermal sleeve (60) according to any one of the preceding claims, wherein each protrusion (64) comprises a fixation plate (82) fixed to the inner surface of the tube (62).

5. The thermal sleeve (60) according to claim 4, wherein the tube (62) defines a plurality of openings (72) circumferentially spaced, each protrusion (64) comprising a pin (88) protruding from the fixation plate (82) radially outward the tube (62), each opening (72) receiving one of the pins (88) to lock the tube (62) with the associated protrusion (64).

6. The thermal sleeve (60) according to any one of the preceding claims, wherein the protrusions (64) comprise first protrusions (90) and second protrusions (92), each of the first protrusions (90) comprising two tongues (94) protruding circumferentially in opposite directions, each of the second protrusions (92) comprising two grooves (96), each groove (96) receiving one of the tongues (94) of the adjacent first protrusion (90) to lock the said first protrusion (90) with the said second protrusion (92).

7. The thermal sleeve (60) according to claim 6, wherein the tube (62) comprises a plurality of mounting brackets (78), each bracket (78) protruding lengthwise from the upper end (68) of the tube (62), each first protrusion (90) comprising a notch (93) receiving one of the brackets (78) to prevent the said first protrusion (90) to rotate with respect to the tube (62).

8. A method for replacing a damaged thermal sleeve (26) of a control rod drive mechanism of a nuclear reactor pressure vessel (10), the control rod drive mechanism comprising a nozzle (24) in which the damaged thermal sleeve (26) is inserted, the nozzle (24) comprising an inner end (32) located in the pressure vessel (10) and an outer end (28) located outside the pressure vessel (10), the nozzle (24) comprising a flared support surface (44) at the outer end (32), the method comprising at least the following steps :
- removing the damaged sleeve (26) from the nozzle (24);
- providing a new thermal sleeve (60) comprising a tube (62) and a plurality of protrusions (64), the protrusions (64) being different from the tube (62), each protrusion (64) extending radially, the tube (62) comprising an upper end (68) and a lower end (70);
- inserting the new thermal sleeve (60) through the inner end (32) of the nozzle (24), **characterized by** the protrusions (64) being in a separated configuration, away from the tube (62) and enabling the sliding of the new thermal sleeve (60) in the nozzle (24);
- moving the protrusions (64) in an assembled configuration in which the protrusions (64) are intermeshed to form a collar (80) presenting an outer diameter greater than the outer diameter of the tube (62); and
- fixing the protrusions (64) to the upper end (68) of the tube (62), the collar (80) resting on the support surface (44) of the nozzle (24) to hold the new thermal sleeve (78) in position in the nozzle (24).

9. The method according to claim 8, wherein the protrusions (64) comprise first protrusions (90) and second protrusions (92), the second protrusions (92) resting on the upper end (68) of the tube (62) and the first protrusions (90) resting on the second protrusions (92) during the insertion of the new thermal sleeve (60) in the nozzle (24).

10. The method according to claim 9, wherein the second protrusions (92) are first moved towards the assembled configuration, the second protrusions (92) being spaced from each other and forming slots, the first protrusions (90) being next moved towards the assembled configuration by insertion of each first protrusion (90) in one of the slots.

11. The method according to any to any one of claims 8 to 10, wherein the method comprises a step of crimping at least one of the protrusions (64) on the tube (62).

12. The method according to any to any one of claims 8 to 11, wherein the method comprises a step of welding between the protrusions (64) and the tube (62).

13. The method according to any to any one of claims 8 to 12, wherein the method comprises a step of disposing means for supporting (98) the new thermal sleeve (60) below the lower end (70) of the tube (62).

## Patentansprüche

1. Thermische Hülse (60) für einen Steuerstab-Antriebsmechanismus eines Kernreaktor-Druckbehälters (10), die thermische Hülse (60) umfassend:
- ein Rohr (62), umfassend ein oberes Ende (68) und ein unteres Ende (70); und
- eine Vielzahl von Vorsprüngen (64), die an dem oberen Ende (68) des Rohrs (62) befestigt sind, wobei sich jeder Vorsprung (64) radial aus dem Rohr (62) heraus erstreckt, wobei sich die Vorsprünge (64) von dem Rohr (62) unterscheiden, **dadurch gekennzeichnet, dass** die Vorsprünge (64) ineinandergreifen, um einen durchgehenden Bund (80) zu bilden, der einen Außendurchmesser aufweist, der größer ist als der Außendurchmesser des Rohrs (62).

2. Thermische Hülse (60) nach Anspruch 1, wobei die thermische Hülse (60) auch einen Trichter (66) umfasst, der einen kegelstumpfförmigen Abschnitt aufweist, der an dem unteren Ende (70) des Rohrs (62) befestigt ist.

3. Thermische Hülse (60) nach Anspruch 1 oder 2, wobei die thermische Hülse (60) acht Vorsprünge (64) umfasst, die sich jeweils über einen gleichen Winkelbereich erstrecken.

4. Thermische Hülse (60) nach einem der vorherigen Ansprüche, wobei jeder Vorsprung (64) eine Befestigungsplatte (82) aufweist, die an der Innenfläche des Rohrs (62) befestigt ist.

5. Thermische Hülse (60) nach Anspruch 4, wobei das Rohr (62) eine Vielzahl von in Umfangsrichtung beabstandeten Öffnungen (72) definiert, jeder Vorsprung (64) umfassend einen Stift (88), der von der Befestigungsplatte (82) radial nach außen aus dem Rohr (62) hervorsteht, wobei jede Öffnung (72) einen der Stifte (88) aufnimmt, um das Rohr (62) mit dem assoziierten Vorsprung (64) zu arretieren.

6. Thermische Hülse (60) nach einem der vorherigen Ansprüche, wobei die Vorsprünge (64) erste Vorsprünge (90) und zweite Vorsprünge (92) umfassen, jeder der ersten Vorsprünge (90) umfassend zwei Zungen (94), die in entgegengesetzter Richtung in Umfangsrichtung hervorstehen, jeder der zweiten Vorsprünge (92) umfassend zwei Nuten (96), wobei jede Nut (96) eine der Zungen (94) des benachbarten ersten Vorsprungs (90) aufnimmt, um den ersten Vorsprung (90) mit dem zweiten Vorsprung (92) zu arretieren.

7. Thermische Hülse (60) nach Anspruch 6, wobei das Rohr (62) eine Vielzahl von Halterungsklammern (78) umfasst, wobei jede Klammer (78) in Längsrichtung von dem oberen Ende (68) des Rohrs (62) hervorsteht, jeder erste Vorsprung (90) umfassend eine Kerbe (93), die eine der Klammern (78) aufnimmt, um zu verhindern, dass der erste Vorsprung (90) in Bezug auf das Rohr (62) dreht.

8. Verfahren zum Ersetzen einer beschädigten
thermischen Hülse (26) eines Steuerstab-Antriebsmechanismus
eines Kernreaktor-Druckbehälters (10), der Steuerstab-Antriebsmechanismus umfassend einen Stutzen (24), in den die beschädigte thermische Hülse (26) eingesetzt ist, der Stutzen (24) umfassend ein inneres Ende (32), das sich in dem Druckbehälter (10) befindet, und ein äußeres Ende (28), das sich außerhalb des Druckbehälters (10) befindet, der Stutzen (24) umfassend eine aufgeweitete Stützfläche (44) an dem äußeren Ende (32), das Verfahren umfassend mindestens die folgenden Schritte:
- Entfernen der beschädigten Hülse (26) von dem Stutzen (24);
- Bereitstellen einer neuen thermischen Hülse (60), umfassend ein Rohr (62) und eine Vielzahl von Vorsprüngen (64), wobei sich die Vorsprünge (64) von dem Rohr (62) unterscheiden, sich jeder Vorsprung (64) radial erstreckt, das Rohr (62) umfassend ein oberes Ende (68) und ein unteres Ende (70);
- Einführen der neuen thermischen Hülse (60) durch das innere Ende (32) des Stutzens (24), **dadurch gekennzeichnet, dass** die Vorsprünge (64) in einer getrennten Konfiguration von dem Rohr (62) entfernt sind und das Gleiten der neuen thermischen Hülse (60) in dem Stutzen (24) ermöglichen;
- Bewegen der Vorsprünge (64) in einer zusammengesetzten Konfiguration, in der die Vorsprünge (64) ineinandergreifen, um einen Bund (80) zu bilden, der einen Außendurchmesser aufweist, der größer ist als der Außendurchmesser des Rohrs (62); und
- Befestigen der Vorsprünge (64) an dem oberen Ende (68) des Rohrs (62), wobei der Bund (80) auf der Tragfläche (44) des Stutzens (24) ruht, um die neue thermische Hülse (78) in dem Stutzen (24) in Position zu halten.

9. Verfahren nach Anspruch 8, wobei die Vorsprünge (64) erste Vorsprünge (90) und zweite Vorsprünge (92) umfassen, die zweiten Vorsprünge (92) auf dem oberen Ende (68) des Rohrs (62) aufliegen und die ersten Vorsprünge (90) während des Einführens der neuen thermischen Hülse (60) in den Stutzen (24) auf den zweiten Vorsprüngen (92) aufliegen.

10. Verfahren nach Anspruch 9, wobei die zweiten Vorsprünge (92) zuerst in Richtung der zusammengesetzten Konfiguration bewegt werden, wobei die zweiten Vorsprünge (92) voneinander beabstandet sind und Schlitze bilden, wobei die ersten Vorsprünge (90) als nächstes in Richtung der zusammengesetzten Konfiguration bewegt werden, indem jeder erste Vorsprung (90) in einen der Schlitze eingeführt wird.

11. Verfahren nach einem der Ansprüche 8 bis 10, wobei das Verfahren einen Schritt eines Bördelns mindestens eines der Vorsprünge (64) an dem Rohr (62) umfasst.

12. Verfahren nach einem der Ansprüche 8 bis 11, wobei das Verfahren einen Schritt eines Schweißens zwischen den Vorsprüngen (64) und dem Rohr (62) umfasst.

13. Verfahren nach einem der Ansprüche 8 bis 12, wobei das Verfahren einen Schritt eines Anordnens von Einrichtungen zum Tragen (98) der neuen thermischen Hülse (60) unterhalb des unteren Endes (70) des Rohrs (62) umfasst.

## Revendications

1. Manchon thermique (60) pour un mécanisme d'entraînement de barre de commande d'une cuve sous pression de réacteur nucléaire (10), le manchon thermique (60) comprenant :
- un tube (62) comprenant une extrémité supérieure (68) et une extrémité inférieure (70) ; et
- une pluralité de saillies (64) fixées à l'extrémité supérieure (68) du tube (62), chaque saillie (64) s'étendant radialement vers l'extérieur du tube (62), les saillies (64) étant différentes du tube (62), **caractérisées par le fait que** les protubérances (64) sont entremêlées pour former un collier continu (80) présentant un diamètre externe supérieur au diamètre externe du tube (62).

2. Manchon thermique (60) selon la revendication 1, dans lequel le manchon thermique (60) comprend également un entonnoir (66) ayant une partie tronconique fixée à l'extrémité inférieure (70) du tube (62).

3. Manchon thermique (60) selon la revendication 1 ou 2, dans lequel le manchon thermique (60) comprend huit saillies (64), chacune s'étendant sur une plage angulaire égale.

4. Manchon thermique (60) selon l'une quelconque des revendications précédentes, dans lequel chaque saillie (64) comprend une plaque de fixation (82) fixée à la surface interne du tube (62).

5. Manchon thermique (60) selon la revendication 4, dans lequel le tube (62) définit une pluralité d'ouvertures (72) espacées circonférentiellement, chaque saillie (64) comprenant une broche (88) faisant saillie depuis la plaque de fixation (82) radialement vers l'extérieur du tube (62), chaque ouverture (72) recevant une des broches (88) pour verrouiller le tube (62) avec la saillie associée (64).

6. Manchon thermique (60) selon l'une quelconque des revendications précédentes, dans lequel les saillies (64) comprennent de premières saillies (90) et de secondes saillies (92), chacune des premières saillies (90) comprenant deux languettes (94) faisant saillie circonférentiellement dans des directions opposées, chacune des secondes saillies (92) comprenant deux rainures (96), chaque rainure (96) recevant une des languettes (94) de la première saillie (90) adjacente pour verrouiller ladite première saillie (90) avec ladite seconde saillie (92).

7. Manchon thermique (60) selon la revendication 6, dans lequel le tube (62) comprend une pluralité de supports de montage (78), chaque support (78) faisant saillie dans le sens de la longueur depuis l'extrémité supérieure (68) du tube (62), chaque première saillie (90) comprenant une encoche (93) recevant l'un des supports (78) pour empêcher ladite première saillie (90) de tourner par rapport au tube (62).

8. Procédé de remplacement d'un manchon
thermique endommagé (26) d'un mécanisme d'entraînement de barre de
commande d'une cuve sous pression de réacteur nucléaire (10), le mécanisme d'entraînement de barre de commande comprenant une buse (24) dans laquelle le manchon thermique endommagé (26) est inséré, la buse (24) comprenant une extrémité interne (32) située dans la cuve sous pression (10) et une extrémité externe (28) située à l'extérieur de la cuve sous pression (10), la buse (24) comprenant une surface d'appui évasée (44) à l'extrémité extérieure (32), le procédé comprenant au moins les étapes suivantes :
- retirer le manchon endommagé (26) de la buse (24) ;
- fournir un nouveau manchon thermique (60) comprenant un tube (62) et une pluralité de saillies (64), les saillies (64) étant différentes du tube (62), chaque saillie (64) s'étendant radialement, le tube (62) comprenant une extrémité supérieure (68) et une extrémité inférieure (70) ;
- insérer le nouveau manchon thermique (60) à travers l'extrémité interne (32) de la buse (24), **caractérisée par le fait que** les saillies (64) sont dans une configuration séparée, à l'écart du tube (62) et permettant le glissement du nouveau manchon thermique (60) dans la buse (24) ;
- déplacer les saillies (64) dans une configuration assemblée dans laquelle les saillies (64) sont entremêlées pour former un collier (80) présentant un diamètre externe supérieur au diamètre externe du tube (62) ; et
- fixer les saillies (64) à l'extrémité supérieure (68) du tube (62), le collier (80) reposant sur la surface d'appui (44) de la buse (24) pour maintenir le nouveau manchon thermique (78) en position dans la buse (24).

9. Procédé selon la revendication 8, dans lequel les saillies (64) comprennent de premières saillies (90) et de secondes saillies (92), les secondes saillies (92) reposant sur l'extrémité supérieure (68) du tube (62) et les premières saillies (90) reposant sur les secondes saillies (92) pendant l'insertion du nouveau manchon thermique (60) dans la buse (24).

10. Procédé selon la revendication 9, dans lequel les secondes saillies (92) sont d'abord déplacées vers la configuration assemblée, les secondes saillies (92) étant espacées les unes des autres et formant des fentes, les premières saillies (90) étant ensuite déplacées vers la configuration assemblée par l'insertion de chaque première saillie (90) dans l'une des fentes.

11. Procédé selon l'une quelconque des revendications 8 à 10, dans lequel le procédé comprend une étape de sertissage d'au moins une des saillies (64) sur le tube (62).

12. Procédé selon l'une quelconque des revendications 8 à 11, dans lequel le procédé comprend une étape de soudage entre les saillies (64) et le tube (62).

13. Procédé selon l'une quelconque des revendications 8 à 12, dans lequel le procédé comprend une étape consistant à disposer des moyens pour soutenir (98) le nouveau manchon thermique (60) sous l'extrémité inférieure (70) du tube (62).
